# FASCICULE DE BREVET EUROPEEN

(11) **EP 1 184 583 B1**
(45) Date de publication et mention de la délivrance du brevet: **04.05.2005**
(21) Numéro de dépôt: 01402159.6
(22) Date de dépôt: 10.08.2001
(51) Int. Cl.: F16C 25/08, F16C 27/08, F16C 35/073

(54) **Palier à roulement à précontrainte axiale, notamment pour colonne de direction de véhicules automobiles**
Wälzlager mit axialer Lagervorspannung, insbesondere für eine Lenksäule eines Kraftfahrzeuges
Axialy pre-stressed roller bearing especially for a steering column in a motor vehicle

(30) Priorité: 30.08.2000 FR 0011057
(43) Date de publication de la demande: 06.03.2002
(73) Titulaire: SKF FRANCE, F-92140 Clamart (FR)
(72) Inventeur: Guegan, Jean-Marie, 37380 Monnaie (FR); Arnault, Benoit, 37100 Tours (FR); Montboeuf, Bruno, Saint-Cyr-sur-Loire (FR)
(74) Mandataire: Casalonga, Axel

(56) Documents cités:
- DE-A- 3 808 556
- DE-B- 1 259 148
- FR-A- 2 779 787
- FR-A- 2 789 134

## Description

La présente invention relève du domaine des paliers à roulement, notamment pour colonnes de direction de véhicules automobiles.

Les colonnes de direction comprennent généralement un arbre dont une extrémité est solidaire d'un volant d'entraînement actionné par le conducteur du véhicule et dont l'autre extrémité est solidaire d'organes mécaniques destinés à assurer le positionnement angulaire des roues du véhicule. L'arbre de la colonne de direction est monté dans un logement de forme tubulaire fixe par l'intermédiaire de deux paliers à roulement, généralement à billes à contact oblique, montés en opposition.

Ces paliers à roulement comprennent généralement une bague extérieure solidaire du logement, une bague intérieure reliée à l'arbre, chaque bague étant pourvue d'un chemin de roulement, par exemple toroïdal, et une rangée d'éléments roulants, par exemple des billes, disposés entre les deux chemins de roulement et en contact avec ceux-ci. On peut aussi prévoir une cage pour maintenir l'espacement circonférentiel régulier des éléments roulants. La cage est réalisée, par exemple en matériau synthétique moulé.

Les bagues de roulement sont réalisées en tôle emboutie et subissent un traitement thermique de durcissement.

Les bagues extérieures sont solidarisées avec le logement de la colonne de direction et les bagues intérieures sont montées sur l'arbre de colonne par l'intermédiaire d'une bague dite de tolérance radialement déformable réalisée par exemple en matière synthétique moulée. La bague de tolérance permet d'assurer le montage aisé du palier à roulement sur l'arbre sans serrage initial et de pouvoir réaliser ensuite la solidarisation entre la bague intérieure et l'arbre, même lorsque leurs sections respectives ont des profils très différents, par exemple une bague intérieure ayant une forme de révolution et un arbre à section carrée. La bague de tolérance permet, en outre, de compenser en se déformant des défauts géométriques et des dispersions dimensionnelles des bagues et de l'arbre, et de transmettre à la bague intérieure l'effort axial de mise en précontrainte.

L'arbre peut avoir une section droite circulaire ou polygonale, par exemple carrée. L'alésage de la bague de tolérance est adapté à la section droite de l'arbre.

La bague de tolérance peut se présenter par exemple sous la forme d'un anneau élastique interrompu par une fente radiale.

Elle peut également se présenter sous la forme d'un anneau comportant un certain nombre de patins répartis sur la circonférence et reliés entre eux par des portions déformables.

L'ensemble fonctionne à jeu nul grâce à un effort axial de précontrainte exercé sur les bagues de tolérance par un organe élastique axialement.

L'effort axial de précontrainte peut être exercé sur la bague de tolérance d'un seul des deux paliers à roulement, la bague de tolérance du deuxième palier à roulement étant immobilisée axialement sur l'arbre dans la direction de cet effort. La bague de tolérance du premier palier à roulement pouvant coulisser axialement sur l'arbre lors de la mise en place dudit palier, les bagues intérieures des roulements tendent à se rapprocher l'une de l'autre sous l'effet de l'effort axial jusqu'a l'obtention d'un jeu nul ou d'une précontrainte dans les roulements.

Cet effort axial peut être exercé par une rondelle élastique, par exemple une rondelle métallique du type ondulé ou à languettes à élasticité axiale.

On rattrape ainsi les jeux internes des roulements et on assure le contact permanent sans jeu et sous précharge entre les bagues et les éléments roulants du palier à roulement.

Les paliers à roulement connus pour colonnes de direction peuvent par ailleurs comprendre une pièce supplémentaire en forme de rondelle frein pour positionner la bague de tolérance sur l'arbre de la colonne de direction. La rondelle frein sert à fermer l'ensemble du palier à roulement et à le bloquer axialement sur l'arbre tout en maintenant une précharge axiale sur la bague de tolérance afin d'obtenir un fonctionnement sans jeu du palier à roulement.

La rondelle frein peut, par exemple, se présenter sous la forme d'une rondelle métallique munie dans son alésage de languettes flexibles dans le sens axial et précambrées de façon à pouvoir fléchir élastiquement et autoriser un déplacement axial de la rondelle frein sur l'arbre dans un sens, mais à venir s'arc-bouter sur l'arbre et empêcher tout déplacement axial de la rondelle frein sur l'arbre dans le sens opposé, donc à venir se bloquer sur l'arbre dans la position correspondant à la précontrainte recherchée.

De façon conventionnelle, les différentes pièces d'un tel palier à roulement ne sont réunies que lors de leur montage dans le dispositif de colonne de direction. Il existe donc un risque de perte d'éléments lors des manipulations et du montage de l'ensemble dans le dispositif de colonne de direction. De plus, plusieurs stocks de pièces différentes doivent être gérés.

C'est pourquoi on a déjà proposé de constituer un ensemble indémontable comprenant les bagues, les éléments roulants, la bague de tolérance et la rondelle frein de façon à pouvoir assembler ledit ensemble avant son montage dans le dispositif de colonne de direction et ainsi de livrer des paliers à roulement prêts à être montés sans risque de perte de pièces.

Une solution décrite par le document FR-A-2 756 885 fait coopérer la rondelle frein avec des bossages de retenue formés sur la bague extérieure. Une autre solution utilise une pièce supplémentaire, à savoir un anneau élastique engagé dans une gorge intérieure de la bague extérieure pour former un jonc de retenue de la rondelle frein. Dans les deux cas, la rondelle frein est intégrée au palier à roulement et ne peut être montée séparément des autres pièces du palier.

Or, pour des raisons relatives au processus de montage, il peut être souhaitable de pouvoir mettre en place la rondelle frein en dernier, après mise en place préalable de tous les autres éléments sous la forme d'un ensemble indémontable dans la colonne de direction.

Par ailleurs, il est connu par le document US-A-5 193 917 de réaliser les moyens de précontrainte axiale et éventuellement aussi des languettes élastiques formant frein pour le blocage axial d'un tel palier à roulement sur l'arbre de la colonne de direction, au niveau d'une gorge ménagée dans l'arbre, d'une seule pièce avec la bague de tolérance moulée en matière synthétique. Les principaux inconvénients de cette solution consistent dans le fait que les moyens de précontrainte, pour obtenir le même effet de ressort, doivent présenter un encombrement axial plus important qu'une rondelle élastique en acier et que les moins bonnes caractéristiques au vieillissement de la matière synthétique par rapport à l'acier peuvent conduire à terme à une altération ou une perte d'élasticité axiale des moyens de précontrainte.

La présente invention vise un palier à roulement à précontrainte axiale, notamment pour colonne de direction de véhicules automobiles, permettant un montage de la rondelle frein séparément des autres parties du roulement réunies sous la forme d'un ensemble.

Le palier à roulement à précontrainte axiale objet de l'invention, notamment pour colonne de direction de véhicules automobiles, disposé entre un logement et un arbre, comprend une bague extérieure pourvue d'un chemin de roulement, une bague intérieure pourvue d'un chemin de roulement, une rangée d'éléments roulants disposés entre les chemins de roulement desdites bagues, une bague de tolérance assurant la liaison de la bague intérieure avec l'arbre, et un élément élastique de précontrainte axiale. Ledit élément est une rondelle venant en appui contre une face radiale de la bague de tolérance et comprenant au moins deux pattes axiales faisant saillie dans le même sens et comportant à leurs extrémités libres des moyens d'accrochage conformés pour coopérer avec la bague intérieure en vue d'assurer la solidarisation axiale de l'élément de précontrainte avec la bague intérieure.

La bague de tolérance peut de préférence être intercalée au moins en partie entre la rondelle de l'élément de précontrainte et la bague intérieure.

Cette solidarisation, donc la réunion des éléments du palier à roulement sous la forme d'un ensemble indémontable, est ainsi assurée indépendamment de la rondelle frein qui sert au blocage axial du palier à roulement sur l'arbre et qui, dans le cas d'un palier de colonne de direction, peut ainsi être montée après la mise en place des autres éléments dans la colonne de direction.

Les moyens d'accrochage à l'extrémité libre des pattes de la rondelle de l'élément de précontrainte peuvent être constitués, par exemple, par un crochet tourné vers l'extérieur, ou par une partie bombée dont la convexité est tournée vers l'extérieur.

Les pattes axiales de l'élément de précontrainte qui peuvent être avantageusement au nombre de trois et être réparties à 120° les unes des autres sur la circonférence peuvent être droites ou comporter au moins une partie coudée ou bombée dont la convexité est tournée vers l'intérieur, donc vers l'arbre, et qui est destinée à venir en appui, avec précontrainte radiale, sur la surface de l'arbre.

En particulier dans ce dernier cas, la bague de tolérance peut avantageusement comporter des languettes radialement élastiques destinées à coopérer avec les pattes axiales de l'élément de précontrainte, de préférence au niveau de la partie coudée desdites pattes, afin d'exercer sur ces dernières un effort dirigé radialement vers l'intérieur vers l'axe du roulement.

L'invention sera mieux comprise à la lecture de la description détaillée de plusieurs modes de réalisation donnés à titre d'exemples et illustrés par les dessins annexés, sur lesquels:
la figure 1 est une coupe axiale d'un premier mode de réalisation d'un palier à roulement suivant l'invention,
la figure 2 est une coupe axiale partielle du palier à roulement de la figure 1 à l'état monté,
la figure 3 est une vue en perspective de la bague de tolérance du palier des figures 1 et 2,
la figure 4 est une coupe axiale partielle de la bague de tolérance de la figure 3 au niveau d'une languette radialement élastique;
la figure 5 est une coupe axiale d'un autre mode de réalisation d'un palier à roulement suivant l'invention; et
la figure 6 est une coupe axiale partielle d'un troisième mode de réalisation d'un palier à roulement suivant l'invention.

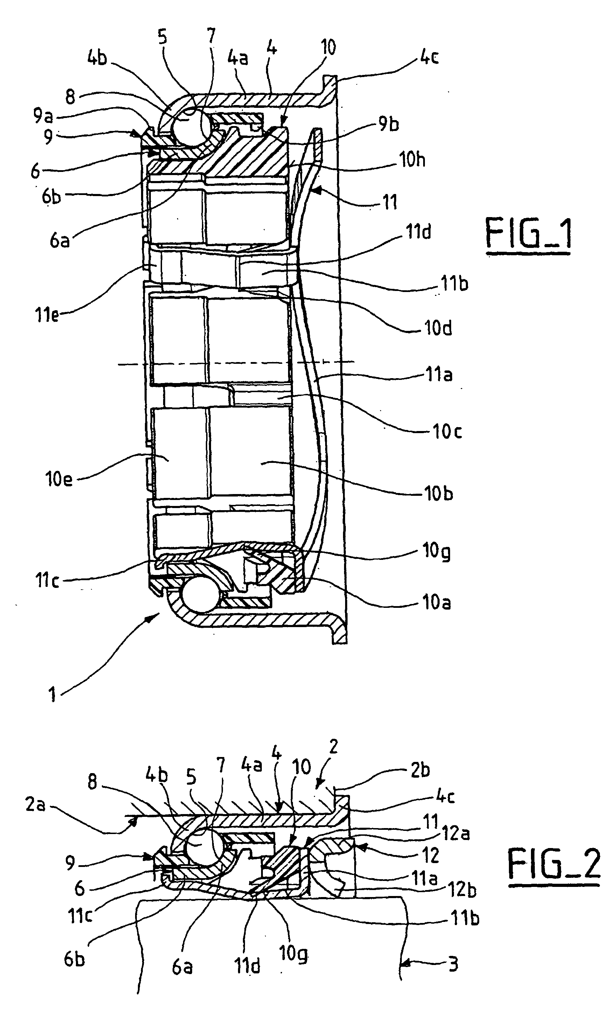

Le palier à roulement 1 selon les figures 1 à 4 servant par exemple de palier à précontrainte axiale de colonne de direction de véhicules automobiles est destiné à être monté, comme le montre la figure 2, entre un logement fixe 2 comprenant un alésage 2a et une surface frontale 2b, et un arbre tournant 3.

Le palier à roulement 1 comprend un roulement composé d'une bague extérieure 4 en tôle emboutie, définissant un chemin de roulement extérieur 5, d'une bague intérieure 6 en tôle emboutie, définissant un chemin de roulement intérieur 7, d'une rangée d'éléments roulants 8, en l'occurrence des billes, disposés entre le chemin de roulement extérieur 5 et le chemin de roulement intérieur 7, et d'une cage 9 maintenant les éléments roulants 8 répartis sur la circonférence.

La bague extérieure 4 comprend une portion cylindrique 4a s'étendant dans un premier sens axial à partir d'une portion toroïdale 4b définissant le chemin de roulement 5 et une collerette radiale 4c s'étendant vers l'extérieur à partir de l'extrémité libre de la portion cylindrique 4a. A l'état monté du palier selon la figure 2, la portion cylindrique 4a est en contact avec l'alésage 2a du logement 2 et la collerette radiale 4c est en contact avec la surface frontale 2b du logement 2 et sert de butée de positionnement axial.

La bague intérieure 6 comprend une portion toroïdale 6a définissant le chemin de roulement 7 et une portion cylindrique 6b s'étendant à partir de la portion toroïdale dans un second sens axial, donc en sens contraire de la portion cylindrique 4a de la bague extérieure.

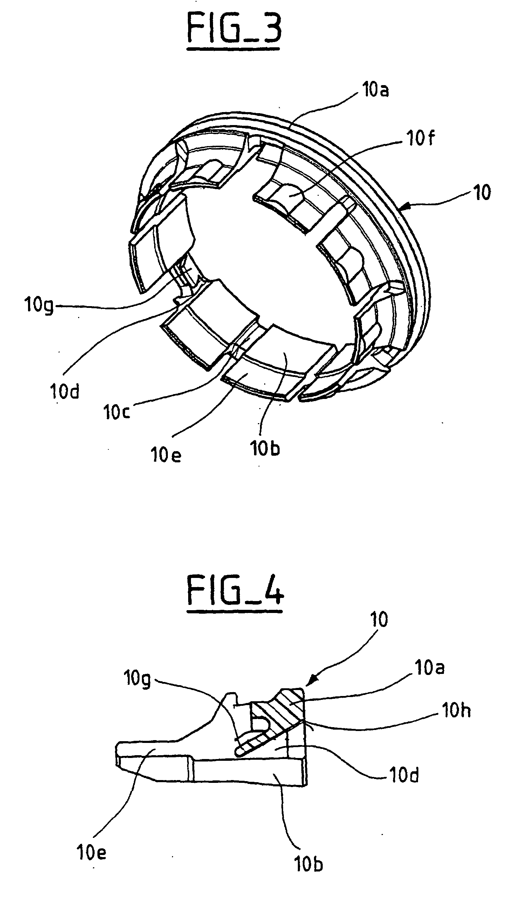

Le palier à roulement 1 comprend par ailleurs une bague de tolérance élastique 10 réalisée en matériau synthétique et comprenant, comme le montre surtout la figure 3, une portion 10a en forme d'anneau fermé portant intérieurement une pluralité de patins 10b séparés dans le sens circonférentiel par des fentes ou encoches axiales. Dans l'exemple illustré, la portion annulaire 10a porte trois groupes de trois patins, les patins de chaque groupe étant séparés par des fentes 10c et les groupes de patins étant séparés par des encoches 10d ayant dans le sens circonférentiel une largeur supérieure à celle desdites fentes 10c.

Les patins 10b ne sont donc reliés entre eux que par des parties de section relativement faible, légèrement déformables, correspondant à la portion annulaire 10a.

Les patins 10b sont prolongés axialement dans ledit second sens axial par des ailes 10e de faible épaisseur radiale dont les faces intérieures sont situées sur un diamètre légèrement plus grand que le diamètre correspondant aux faces intérieures des patins 10b. Chaque aile 10e comporte sur sa face extérieure un bossage 10f situé au milieu de sa largeur dans le sens circonférentiel.

A l'intérieur de chaque encoche 10d, la portion annulaire 10a porte une languette 10g faisant saillie de façon oblique vers l'intérieur et dans ledit second sens axial, sensiblement jusqu'au diamètre intérieur des patins 10b, comme le montre surtout la figure 4.

Enfin, le palier à roulement 1 comprend un élément élastique de précontrainte 11 constitué par une rondelle 11a axialement élastique à plusieurs ondulations (voir figure 1) réalisée par découpe et pliage d'un feuillard d'acier, la rondelle 11a venant en appui contre une face 10h sensiblement radiale de la bague de tolérance 10. Cet élément comprend en outre plusieurs pattes 11b en porte-à-faux faisant saillie sensiblement axialement dans le même sens sur la rondelle 11a, sur le diamètre intérieur de cette dernière, à l'endroit des sommets des ondulations. Dans l'exemple illustré, les pattes 11b sont au nombre de trois et sont réparties à 120° les unes des autres, leur largeur dans le sens circonférentiel étant légèrement inférieure à la largeur circonférentielle des encoches 10d de la bague de tolérance 10. Chaque patte 11b est repliée en crochet 11c vers l'extérieur à son extrémité libre et est légèrement coudée entre ses extrémités opposées de telle manière que le coude 11d décalé vers l'intérieur par rapport aux deux extrémités de la patte soit situé sur un diamètre inférieur au diamètre intérieur des patins 10b de la bague de tolérance 10.

Comme représenté sur la figure 1, la longueur des pattes 11b est telle que lors de l'assemblage du palier à roulement 1 comprenant le roulement proprement dit composé des bagues 4 et 6, des éléments roulants 8 et de la cage 9, ainsi que la bague de tolérance 10 et l'élément de précontrainte 11, les ailes 10e de la bague de tolérance 10 étant insérées dans ledit second sens axial à l'intérieur de la bague intérieure 6 et les pattes 11b de l'élément de précontrainte 11 étant insérées dans ce même second sens axial dans les encoches 10d de la bague de tolérance 10, les crochets 11c à l'extrémité libre des pattes 11b coopèrent avec l'extrémité libre de la portion cylindrique 6a de la bague intérieure 6.

Les éléments constitutifs du roulement proprement dit et la bague de tolérance 10 sont de façon connue en soi liés axialement par l'intermédiaire de la cage 9 qui comporte des crochets 9a, 9b susceptibles de coopérer avec la bague extérieure 4 d'une part et avec la bague de tolérance 10 d'autre part.

L'élément de précontrainte 11 étant d'autre part lié axialement à la bague intérieure 6 par les pattes 11b munies des crochets 11c, la bague de tolérance 10 est maintenue axialement entre la bague intérieure 6 et la rondelle 11a de l'élément de précontrainte 11. On dispose ainsi d'un ensemble unitaire que l'on peut transporter et manipuler sans risquer un démontage accidentel ou la désolidarisation de certains éléments.

Les languettes élastiques 10g de la bague de tolérance 10 coopèrent avec la partie coudée 11d des pattes 11b de l'élément de précontrainte 11 afin d'assurer un pré-centrage de l'élément de précontrainte 11 dans la bague de tolérance 10 lors de l'assemblage de ces pièces et d'exercer sur lesdites pattes 11b un effort radial dirigé vers l'axe du roulement et de renforcer l'action desdites pattes sur l'arbre, après montage du palier à roulement sur l'arbre, selon la figure 2.

Sur cette figure 2, on reconnaît le palier à roulement 1 monté sur l'arbre 3 et dans son logement 2, après la mise en précontrainte et l'immobilisation axiale sur l'arbre au moyen d'une rondelle frein 12 comprenant une portion 12a en anneau fermé et une pluralité de languettes 12b faisant saillie vers l'intérieur sur la portion 12a en étant inclinées dans un sens axial de telle manière que lesdites languettes 12b puissent fléchir élastiquement lors de l'engagement de la rondelle frein 12 sur l'arbre 3 dans le sens de montage du palier à roulement correspondant audit second sens axial, mais s'opposent par effet d'arc-boutement à tout déplacement de la rondelle frein 12 sur l'arbre 3 dans le sens contraire.

Pour le montage dans la colonne de direction, l'ensemble préassemblé comprenant le roulement proprement dit (bagues 4 et 6, éléments roulants 8, cage 9), ainsi que la bague de tolérance 10 et l'élément de précontrainte 11, est mis en place entre le logement 2 et l'arbre 3 de la colonne. Ce n'est qu'ensuite que l'on bloque l'ensemble axialement sur l'arbre 3 avec précontrainte axiale à l'aide de la rondelle frein 12 qui est indépendante de cet ensemble.

Les pattes axiales 11b de l'élément de précontrainte 11 non seulement maintiennent ledit ensemble préassemblé avant et pendant le montage, par les crochets 11c coopérant avec la bague intérieure 6, mais facilitent également le centrage de l'ensemble sur l'arbre 3. De plus, l'action élastique radiale des parties coudées 11d des pattes 11b, renforcée par l'action des languettes élastiques 10g de la bague de tolérance 10, assure une certaine retenue par friction de l'ensemble sur l'arbre 3, tout en autorisant un déplacement axial par rapport à ce dernier.

Une fois l'ensemble positionné correctement, il suffit d'amener la rondelle frein 12 en butée contre la rondelle 11a de l'élément de précontrainte 11. L'écrasement des ondulations de la rondelle 11a permet d'obtenir une précontrainte calibrée.

Par ailleurs, l'effort axial exercé sur la bague de précontrainte 10 par la rondelle 11a provoque, par l'effet de cône dans la bague intérieure du roulement, un resserrement des patins 10b de la bague de tolérance 10 sur l'arbre 3, grâce à la déformation des parties plus minces de la portion annulaire 10a entre les patins 10b, au droit des fentes 10c et des encoches 10d.

Le serrage de la bague de tolérance 10 sur l'arbre étant complété par le serrage des pattes 11b de l'élément de précontrainte 11 sur l'arbre 3, lui-même renforcé par l'action des languettes 10g de la bague 10, il existe une très bonne liaison entre le roulement et l'arbre et le palier à roulement de colonne de direction est prêt à remplir sa fonction dans les meilleures conditions.

Il est à noter qu'après montage du palier à roulement sur l'arbre, la remontée radiale du coude 11d des pattes 11b de l'élément de précontrainte 11 provoque également la remontée radiale des pattes 11b au niveau de leur extrémité libre et leur mise en contact élastique permanent avec l'alésage de la bague intérieure 6 du roulement. Il est aussi possible d'utiliser le palier à roulement pour faire passer un courant électrique entre l'arbre et le logement via la rondelle frein 12, l'élément de précontrainte 11, la bague intérieure 6, les éléments roulants 8 et la bague extérieure 4. Cette possibilité peut constituer un avantage appréciable pour réaliser par exemple une mise à la masse du volant de direction, afin de limiter les risques de déclenchement intempestif du coussin gonflable ("airbag") du conducteur par les phénomènes d'électricité statique au cas où la mise à la masse du siège du conducteur n'est pas ou n'est plus correctement assurée.

On peut aussi utiliser le palier à roulement pour réaliser un contact électrique tournant destiné à alimenter en courant certains accessoires annexes.

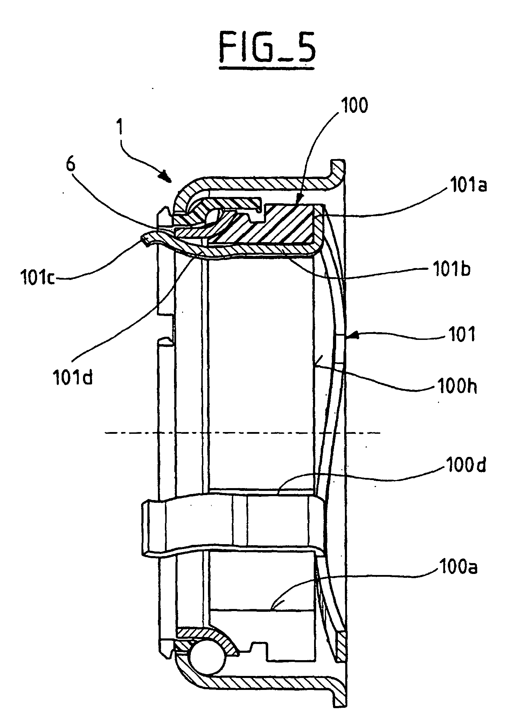

La figure 5 illustre un autre mode de réalisation du palier à roulement suivant l'invention, qui se distingue du mode de réalisation des figues 1 à 4 principalement par la structure de la bague de tolérance qui est constituée ici par une bague élastique 100 ouverte, c'est-à-dire fendue en un point de sa circonférence.

L'alésage 100a de la bague de tolérance 100 est cylindrique et comporte un certain nombre de rainures axiales 100d destinées à recevoir les pattes axiales 101b de l'élément de précontrainte 101 comprenant également une rondelle ondulée 101a en appui contre une face radiale 100h de la bague de tolérance 100.

Les pattes axiales 101b ont une plus grande largeur que les pattes 11b de l'exemple des figures 1 à 4, ce qui leur procure une raideur radiale suffisante pour pouvoir se passer des languettes 10g prévues sur la bague de tolérance 10 pour renforcer l'action élastique des pattes axiales 11b de l'élément de précontrainte 11 des figures 1 à 4.

Par ailleurs, les pattes 101b comportent à leurs extrémités libres non pas un crochet vers l'extérieur, mais une partie bombée ou coudée 101c dont la convexité est tournée vers l'extérieur, pour coopérer avec effet d'accrochage avec la bague intérieure 6 du roulement 1. L'interférence de la partie d'accrochage 101c des pattes 101b avec la bague 6, après montage de l'ensemble dans la colonne de direction, est renforcée par l'aménagement, sur les pattes 101b, d'une partie bombée 101d dont la convexité est tournée vers l'intérieur, ce qui provoque la remontée radiale de la partie d'accrochage 101c sous l'action de l'arbre de la colonne de direction.

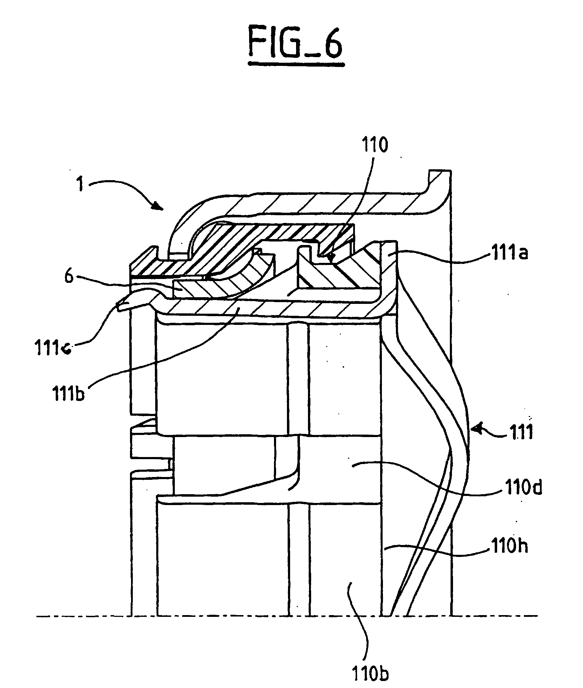

Dans le mode de réalisation suivant la figure 6, l'élément de précontraint axiale 111 comprend de nouveau une rondelle ondulée 111a qui est en appui contre une face radiale 110h de la bague de tolérance 110 et qui comporte des pattes axiales 111b en porte-à-faux. Les pattes 111b sont ici droites entre la rondelle 110a et leur extrémité libre où elles comportent une partie bombée ou coudée 111c à convexité tournée vers l'extérieur, pour coopérer avec effet d'accrochage avec la bague intérieure 6 du roulement 1. Les pattes axiales 111b sont complètement logées à l'intérieur des rainures 110d ménagées entre les patins 110b de la bague de tolérance 110 et ne portent pas sur la surface de l'arbre pendant et après le montage du palier à roulement sur ledit arbre. Elles coopèrent ainsi avec effet d'accrochage avec la bague 6 ,avec précontrainte radiale sous l'effet de leur seule élasticité en flexion, sans intervention de l'arbre.

Les moyens d'accrochage 11c, 101c, 111c aux extrémités libres des pattes 11b, 101b, 111b de l'élément de précontrainte pourraient être conformés différemment et pourraient coopérer avec la bague intérieure 6 du roulement 4 à un endroit autre que l'extrémité éloignée de la rondelle de l'élément de précontrainte.

Ce dernier pourrait également comprendre une rondelle de précontrainte autre qu'une rondelle ondulée.

Au lieu d'être réalisé à partir d'un feuillard d'acier, l'élément de précontrainte pourrait être moulé d'une seule pièce en matière synthétique, mais séparément de la bague de tolérance et de préférence en une matière différente de celle de ladite bague, compte tenu des fonctions différentes de ces deux éléments.

## Revendications

1. Palier à roulement à précontrainte axiale, notamment pour colonne de direction de véhicules automobiles, disposé entre un logement (2) et un arbre (3), comprenant une bague extérieure (4) pourvue d'un chemin de roulement (5), une bague intérieure (6) pourvue d'un chemin de roulement (7), une rangée d'éléments roulants (8) disposés entre les chemins de roulement (5, 7) desdites bagues (4, 6), une bague de tolérance (10, 100; 110) assurant la liaison de la bague intérieure (6) avec l'arbre (3), et un élément de précontrainte axiale (11; 101; 111), **caractérisé par le fait que** ledit élément de précontrainte (11; 101; 111) est une rondelle (11a; 101a; 111a) venant en appui contre une face radiale (10h; 100h; 110h) de la bague de tolérance (10; 100; 110) et comprenant au moins deux pattes sensiblement axiales (11b; 101b; 111b) faisant saillie dans le même sens et comportant à leurs extrémités libres des moyens d'accrochage (11c; 101c; 111c) conformés pour coopérer avec la bague intérieure (6) en vue d'assurer la solidarisation axiale de l'élément de précontrainte (11; 101; 111) avec la bague intérieure (6).

2. Palier à roulement suivant la revendication 1, **caractérisé par le fait que** la rondelle (10a; 100a; 110a) de l'élément de précontrainte (11; 101; 111) est une rondelle axialement élastique comportant plusieurs ondulations.

3. Palier à roulement suivant la revendication 1 ou 2, **caractérisée par le fait que** la bague de tolérance (10; 100; 110) est intercalée au moins en partie entre la rondelle (11a; 101a; 111a) de l'élément de précontrainte (11; 101; 111) et la bague intérieure (6).

4. Palier à roulement suivant l'une quelconque des revendications précédentes, **caractérisée par le fait que** les moyens d'accrochage (11c; 101c) sont conformés pour coopérer avec l'extrémité de la bague intérieure (6) éloignée de l'élément de précontrainte (11; 101; 111).

5. Palier à roulement suivant l'une quelconque des revendications précédentes, **caractérisé par le fait que** les moyens d'accrochage comprennent un crochet (11c; 111c) tourné vers l'extérieur.

6. Palier à roulement suivant l'une quelconque des revendications 1 à 4, **caractérisé par le fait que** les moyens d'accrochage comprennent une partie bombée (101c) dont la convexité est tournée vers l'extérieur.

7. Palier à roulement suivant l'une quelconque des revendications précédentes, **caractérisé par le fait que** les pattes axiales (111b) sont droites entre la rondelle (110a) et les moyens d'accrochage (111c).

8. Palier à roulement suivant l'une quelconque des revendications 1 à 6, **caractérisé par le fait que** les pattes axiales (11b; 101b) comportent au moins une partie coudée ou bombée (11d; 101d) dont la convexité est tournée vers l'intérieur et qui est destinée à venir en appui, avec précontrainte radiale, sur la surface de l'arbre (3).

9. Palier à roulement suivant l'une quelconque des revendications précédentes, **caractérisé par le fait que** la bague de tolérance (10; 100; 110) comporte dans son alésage plusieurs encoches ou rainures axiales (10d; 100d; 110d) pour le passage desdites pattes axiales (11b; 101b; 111b) de l'élément de précontrainte (11; 101; 111).

10. Palier à roulement suivant la revendication 8 ou 9, **caractérisé par le fait que** la bague de tolérance (10) comporte des languettes (10g) radialement élastiques destinées à coopérer avec lesdites pattes axiales (11b) de l'élément de précontrainte (11), afin d'exercer sur ces dernières un effort dirigé radialement vers l'intérieur vers l'axe de roulement.

## Patentansprüche

1. Wälzlager mit axialer Vorspannung, insbesondere für eine Lenksäule eines Kraftfahrzeugs, angeordnet zwischen einer Aufnahme (2) und einer Welle (3), aufweisend einen äußeren Ring (4), der mit einer Wälzbahn (5) ausgestattet ist, einem inneren Ring (6), der mit einer Wälzbahn (7) ausgestattet ist, eine Reihe von Wälzelementen (8), die zwischen den Laufbahnkreisen (5, 7) der Ringe (4, 6) angeordnet ist, ein Toleranzring (10, 100; 110), welcher die Verbindung des inneren Rings (6) mit der Welle (3) gewährleistet, und ein Element für axiale Vorspannung (11; 101;111),
**dadurch gekennzeichnet, dass** das Vorspannungselement (11; 101; 111) eine Scheibe (11a; 101a; 111a) ist, welche gegen eine radiale Fläche (10h; 100h; 110h) des Toleranzrings (10; 100; 110) drückt und mindestens zwei im Wesentlichen axiale Klammern (11b; 101b; 111b) aufweist, welche in die selben Richtung vorragen und an ihren freien Enden Verrastungseinrichtungen (11c; 101c; 111c) aufweisen und angepasst sind, um mit dem inneren Ring (6) zusammenzuwirken, um die axiale Festlegung des Vorspannungselements (11; 101; 111) an dem inneren Ring (6) zu gewährleisten.

2. Wälzlager nach. Anspruch 1, **dadurch gekennzeichnet, dass** die Scheibe (10a; 100a; 110a) des Vorspannungselements (11; 101; 111) eine in axialer Richtung elastische Scheibe mit mehreren Wellungen ist.

3. Wälzlager nach Anspruch 1 oder 2, **dadurch gekennzeichnet, dass** der Toleranzring (10; 100; 110) mindestens teilweise zwischen der Scheibe (11a; 101a; 111a) des Vorspannungselements (11; 101; 111) und dem inneren Ring (6) zwischengelagert ist.

4. Wälzlager nach einem der vorangehenden Ansprüche, **dadurch gekennzeichnet, dass** die Verrastungseinrichtungen (11c; 101c) zum Zusammenwirken mit dem Ende des inneren Rings (6) ausgebildet sind, welches von dem Vorspannungselement (11; 101; 111) abgewandt ist.

5. Wälzlager nach einem der vorangehenden Ansprüche, **dadurch gekennzeichnet, dass** die Verrastungseinrichtungen einen nach außen gebogenen Haken (11c; 111c) aufweisen.

6. Wälzlager nach einem der Ansprüche 1 bis 4, **dadurch gekennzeichnet, dass** die Verrastungseinrichtungen einen gewölbten Bereich (101c) aufweisen, dessen konvexe Seite nach außen gebogen ist.

7. Wälzlager nach einem der vorangehenden Ansprüche, **dadurch gekennzeichnet, dass** die axialen Klammern (111b) zwischen der Scheibe (110a) und den Verrastungseinrichtungen (111c) gerade sind.

8. Wälzlager nach einem der Ansprüche 1 bis 6, **dadurch gekennzeichnet, dass** die axialen Klammern (11b; 101b) mindestens einen gewölbten oder gebogenen Bereich (11d; 101d) aufweisen, dessen konvexe Seite nach innen gebogen ist und der dazu bestimmt ist, mit radialer Vorspannung gegen die Oberfläche der Welle (3) zu drücken.

9. Wälzlager nach einem der vorangehenden Ansprüche, **dadurch gekennzeichnet, dass** der Toleranzring (10; 100; 110) in seiner Bohrung eine Mehrzahl axialer Rinnen oder Nuten (10d; 100d; 110d) für den Durchlass der axialen Klammern (11b; 101b; 111b) des Vorspannungselements (11; 101; 111) aufweist.

10. Wälzlager nach einem der Ansprüche 8 oder 9, **dadurch gekennzeichnet, dass** der Toleranzring (10) radial elastische Zungen (10g) aufweist, welche mit den axialen Klammern (11b) des Vorspannungselements (11) zusammenwirken, um auf Letztere eine radiale Kraft nach innen in Richtung der Drehachse auszuüben.

## Claims

1. Rolling bearing with axial preload, particularly for a motor vehicle steering column, arranged between a housing (2) and a shaft (3), comprising an outer ring (4) provided with a raceway (5), an inner ring (6) provided with a raceway (7), a row of rolling bodies (8) arranged between the raceways (5, 7) of the said rings (4, 6), a tolerance ring (10, 100; 110) providing the connection between the inner ring (6) and the shaft (3), and an axial preload element (11; 101; 111), **characterized in that** the said preload element (11; 101; 111) is a washer (11a; 101a; 111a) bearing against a radial face (10h; 100h; 110h) of the tolerance ring (10; 100; 110) and comprising at least two essentially axial lugs (11b; 101b; 111b) projecting in the same direction and having at their free ends catching means (11c; 101c; 111c) shaped to collaborate with the inner ring (6) with a view to axially securing the preload element (11; 101; 111) to the inner ring (6).

2. Rolling bearing according to Claim 1, **characterized in that** the washer (10a; 100a; 110a) of the preload element (11; 101; 111) is an axially elastic washer with several crinkles.

3. Rolling bearing according to Claim 1 or 2, **characterized in that** the tolerance ring (10; 100; 110) is inserted at least partially between the washer (11a; 101a; 111a) of the preload element (11; 101; 111) and the inner ring (6).

4. Rolling bearing according to any one of the preceding claims, **characterized in that** the catching means (11c; 101c) are shaped to collaborate with the end of the inner ring (6) remote from the preload element (11; 101; 111).

5. Rolling bearing according to any one of the preceding claims, **characterized in that** the catching means comprise a hook (11c; 111c) facing outwards.

6. Rolling bearing according to any one of Claims 1 to 4, **characterized in that** the catching means comprise a bulging part (101c) the convex face of which faces outwards.

7. Rolling bearing according to any one of the preceding claims, **characterized in that** the axial lugs (111b) are straight between the washer (110a) and the catching means (111c).

8. Rolling bearing according to any one of Claims 1 to 6, **characterized in that** the axial lugs (11b; 101b) have at least one bent or bulging part (11d; 101d) the convex face of which faces inwards and which is intended to bear, with radial preload, against the surface of the shaft (3).

9. Rolling bearing according to any one of the preceding claims, **characterized in that** the tolerance ring (10; 100; 110) has, in its bore, several axial grooves or slots (10d; 100d; 110d) for the passage of the said axial lugs (11b; 101b; 111b) of the preload element (11; 101; 111).

10. Rolling bearing according to Claim 8 or 9, **characterized in that** the tolerance ring (10) has radially elastic tabs (10g) intended to collaborate with the said axial lugs (11b) of the preload element (11) so as to exert on the latter a force directed radially inwards towards the axis of the bearing.
